# EUROPÄISCHE PATENTSCHRIFT

(11) **EP 0 484 642 B1**
(45) Veröffentlichungstag und Bekanntmachung des Hinweises auf die Patenterteilung: **22.06.1994**
(21) Anmeldenummer: 91114240.4
(22) Anmeldetag: 24.08.1991
(51) Int. Cl.: B60K 15/04

(54) **Dichtungsanordnung zur Verwendung im Einfüllstutzen eines Kraftstofftanks**
Sealing arrangement for a fuel tank filler pipe
Dispositif d'étoupage à utiliser dans la tubulure de remplissage d'un réservoir de carburant

(30) Priorität: 30.10.1990 DE 4034467
(43) Veröffentlichungstag der Anmeldung: 13.05.1992
(73) Patentinhaber: Firma Carl Freudenberg, 69469 Weinheim (DE)
(72) Erfinder: Sausner, Andreas, W-6000 Frankfurt/M. 71 (DE); Sielaff, Jens, W-6720 Speyer (DE)

(56) Entgegenhaltungen:
- DE-A- 3 829 948
- US-A- 3 500 843
- US-A- 4 765 504
- AT-E-57345

## Beschreibung

Die Erfindung betrifft eine Dichtungsanordnung zur Verwendung im Einfüllstutzen eines Kraftstofftanks, umfassend eine Radialdichtung zur Abdichtung einer in den Einfüllstutzen einführbaren Zapfpistole und eine hiervon unabhängige Axialdichtung zur Abdichtung einer Bleifreiklappe, wobei die Bleifreiklappe an einem federbelasteten Schwenkarm befestigt und durch den Schwenkarm an die Axialdichtung andrückbar ist.

Eine solche Dichtungsanordnung ist bekannt aus der DE-PS 38 29 948. Die darin enthaltene Bleifreiklappe soll ein Entweichen von Kraftstoffdämpfen außerhalb der Betankungszeiten verhindern. Sie wird den diesbezüglichen Erfordernissen des Umweltschutzgedankens noch nicht in wünschenswerter Weise gerecht.

Der Erfindung liegt die Aufgabe zugrunde, eine Dichtungsanordnung der eingangs genannten Art derart weiterzuentwickeln, daß im langfristigen Gebrauch eine zuverlässige Abdichtung des Kraftstofftanks durch die Bleifreiklappe gewährleistet ist.

Diese Aufgabe wird erfindungsgemäß bei einer Dichtungsanordnung der eingangs genannten Art durch die kennzeichnenden Merkmale von Anspruch 1 gelöst.

Auf vorteilhafte Ausgestaltungen nehmen die Unteransprüche Bezug.

Bei der erfindungsgemäßen Dichtungsanordnung ist es vorgesehen, daß die Bleifreiklappe und/oder die Axialdichtung in bezug auf die Achse kippbar abgestützt und hierdurch oberflächenbündig aneinander anlegbar sind. Bei der Herstellung und/oder Montage auftretende Verkantungen der Bleifreiklappe in bezug auf die Axialdichtung werden hierdurch selbsttätig ausgeglichen, wodurch auch in extremen Fällen eine oberflächenbündige und damit dichte Anlage der beiden Teile aneinander gewährleistet ist. Eine aufwendige Kontrolle des erzielten Abdichtungsergebnisses kann in den meisten Fällen entfallen. Als besonders zweckmäßig hat es sich erwiesen, wenn die Bleifreiklappe und/oder die Axialdichtung auf einer kalottenförmig gestalteten Stützfläche abgestützt sind. Auch relativ große Relativverlagerungen lassen sich hierdurch beim Schließen der Bleifreiklappe problemlos ausgleichen.

Dem Erfindungsgedanken wird grundsätzlich eine Ausführung gerecht, bei der nur eine der Stützflächen kalottenförmig ausgebildet ist. Diese kann zwischen dem Schwenkarm und der Bleifreiklappe vorgesehen und beispielsweise einen Bestandteil eines Kugelgelenkes bilden. Die Änderungen der bekannten Dichtungsanordnung im Sinne der vorliegenden Erfindung gestalten sich unter diesem Gesichtspunkt besonders einfach.

Falls ein Kugelgelenk zur Anwendung gelangt hat es sich als vorteilhaft bewährt, wenn dieses selbsthemmend ausgebildet ist.

Unter dem Begriff "selbsthemmend" ist in diesem Zusammenhang zu verstehen, daß Relativbewegungen innerhalb des Gelenkes nur durch Kräfte möglich sein sollen, die ihrem Betragen nach zumindest denjenigen Kräften entsprechen, die in dem Schwenkarm durch seine Federbelastung wirksam sind. Die lagemäßige Zuordnung der Bleifreiklappe in bezug auf den Schwenkarm erfährt hierdurch im Anschluß an die optimale gegenseitige Zuordnung während des normalen Gebrauchs keine weitere Veränderung. Nach einer Überführung der Bleifreiklappe in ihre Schließstellung ist dadurch ohne zeitliche Verzögerung eine gasdichte Berührung der Axialdichtung durch die Bleifreiklappe in allen Umfangsbereichen gewährleistet.

Die Bleifreiklappe kann mittels einer Druckfeder um die Achse kippbar auf dem Schwenkarm abgestützt sein. Die Realisierung der Kippfähigkeit läßt sich bei einer solchen Ausführung besonders einfach bewerkstelligen. Ein die Kippfähigkeit behinderndes Verklemmen ist so gut wie ausgeschlossen und hierdurch eine gute Gebrauchsfähigkeit über eine besonders lange Gebrauchsdauer gewährleistet.

Die Bleifreiklappe und/oder die Axialdichtung kann mit zumindest einer umlaufenden und senkrecht vorstehenden Dichtleiste versehen sein, die mit der Axialdichtung bzw. Bleifreiklappe in Eingriff bringbar ist. Unter Ausnutzung von Labyrintheffekten u. ä. läßt sich hierdurch eine Verbesserung des Abdichtungsergebnisses erzielen.

Ähnlichen Zielsetzungen dient eine Ausführung, bei der die Bleifreiklappe und/oder die Axialdichtung mit zumindest einer umlaufenden und senkrecht zurückspringenden Dichtnut versehen ist, die mit der Axialdichtung bzw. der Bleifreiklappe in Eingriff bringbar ist.

Zwischen einander in radialer Richtung aufeinanderfolgenden Dichtzonen werden hierdurch strömungsdynamische Toträume geschaffen, in denen den Dichtspalt passierende Kraftstoffdämpfe kondensieren und dadurch von einem Entweichen gehindert werden.

Ein optimales Abdichtungsergebnis läßt sich erreichen, wenn die Bleifreiklappe und/oder die Axialdichtung mit mindestens einer umlaufenden und senkrecht vorstehenden Dichtleiste versehen ist, die mit einer Dichtnut der Axialdichtung bzw. Bleifreiklappe in Eingriff bringbar ist. Es resultiert ein Labyrintheffekt, der das erzielte Abdichtungsergebnis wesentlich verbessert, insbesondere in Fällen, in denen die Dichtleiste und die Dichtnut bei einer solchen Ausbildung einander nach Form und Größe entsprechen.

Durch die Abstützung der Bleifreiklappe und/oder der Axialdichtung auf einer kalottenförmig gestalteten Stützfläche ist es nicht mehr zwingend notwendig, zumindest eines der beiden Teile aus einem weichelastischen Werkstoff zu erzeugen. Unter Gewährleistung eines guten Abdichtungsergebnisses lassen sich vielmehr beiderseits auch Hartwerkstoffe verwenden. Diese lassen sich problemlos in größter Maßhaltigkeit erzeugen und zeichnen sich bei kostengünstiger Verfügbarkeit vielfach durch eine außerordentlich große Maßhaltigkeit in bezug auf die langfristige Einwirkung von Kraftstoffdämpfen aus. Für den Gebrauchswert der erfindungsgemäßen Dichtungsanordnung ist das von großem Vorteil.

Die Erfindung wird nachfolgend anhand der beigefügten Zeichnung weiter verdeutlicht. Es zeigen:
- Figur 1: einen Ausschnitt aus einer Dichtungsanordnung der erfindungsgemäßen Art in längsgeschnittener Darstellung.
- Figur 2: eine beispielhafte Ausführung der Axialdichtung und der Bleifreiklappe in längsgeschnittener Darstellung.

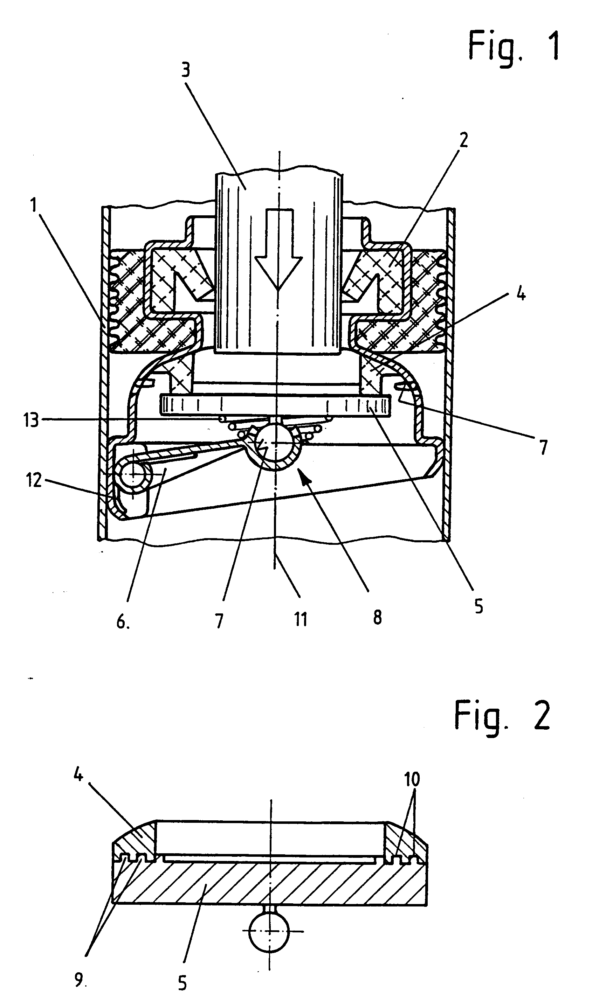

Die in Figur 1 gezeigte Dichtungsanordnung ist zur Verwendung im Einfüllstutzen 1 eines Kraftstofftanks bestimmt. Sie umfaßt eine Radialdichtung 2 zur Abdichtung einer in den Einfüllstutzen 1 einführbaren Zapfpistole 3 und eine hiervon unabhängige Axialdichtung 4 zur Abdichtung einer Bleifreiklappe 5, wobei die Bleifreiklappe 5 an einem federbelasteten Schwenkarm 6 befestigt und durch den Schwenkarm 6 an die Axialdichtung 4 andrückbar ist. Die Bleifreiklappe 5 und die Axialdichtung 4 sind bei dem gezeigten Ausführungsbeispiel auf kalottenförmig gestalteten Stützflächen 7 abgestützt und hiervon oberflächeneben aneinander anlegbar. Die kalottenförmig gestaltete Stützfläche 7 zwischen der Bleifreiklappe 5 und dem Schwenkarm 6 bildet einen Bestandteil eines Kugelgelenkes 8, das selbsthemmend ausgebildet ist. Die Selbsthemmung ist dabei so bemessen, daß die Andrückkraft der den Schwenkarm 6 belastenden Feder 11 genügend groß ist für die Gewährleistung einer auf dem gesamten Umfang dichten Anlageberührung zwischen der Bleifreiklappe 5 und der Axialdichtung 4. Im Anschluß an die Erzielung einer diesbezüglich optimalen Grundeinstellung resultiert hieraus normalerweise keine weitere lagemäßig veränderte Zuordnung der Bleifreiklappe 5 zu dem Schwenkhebel 6. Während einer Schließbewegung ergibt sich dadurch eine dichtende Anlageberührung zwischen der Bleifreiklappe 5 und der Axialdichtung 4 in kürzestmöglicher Zeitspanne.

Bei einer Ausführung, bei der das Kugelgelenk 8 nicht selbsthemmend ausgebildet ist, besteht die Möglichkeit, die Bleifreiklappe (5) mittels einer Druckfeder 12 um die Achse 11 kippbar auf dem Schwenkarm 6 abzustützen. Neben einer vereinfachten Erstellung ist hierdurch im langfristigen Gebrauch eine besonders gute Funktionssicherheit gewährleistet.

Figur 2 zeigt eine Axialdichtung 4 und eine Bleifreiklappe 5 in längsgeschnittener Darstellung. Beide Teile bestehen bei dieser Variante aus einem Hartwerkstoff. Die Axialdichtung 4 und die Bleifreiklappe 5 sind kreisförmig begrenzt und mit mehreren konzentrisch umlaufenden Dichtleisten 9 bzw. Dichtnuten 10 versehen, die einander nach Form und Größe entsprechen und dichtend ineinanderfügbar sind. Trotz der Verwendung von Hartwerkstoffen für die Herstellung beider Teile wird hierdurch ein ausgezeichnetes Abdichtungsergebnis erzielt.

## Patentansprüche

1. Dichtungsanordnung zur Verwendung im Einfüllstutzen (1) eines Kraftstofftanks, umfassend eine Radialdichtung (2) zur Abdichtung einer in den Einfüllstützen einführbaren Zapfpistole (3) und eine hiervon unabhängige Axialdichtung (4) zur Abdichtung einer Bleifreiklappe (5), wobei die Bleifreiklappe an einem federbelasteten Schwenkarm (6) befestigt, mit einer ihre Achse konzentrisch umschließenden Dichtfläche versehen, an einem federbelasteten Schwenkarm befestigt und durch den Schwenkarm an die Axialdichtung andrückbar ist, dadurch gekennzeichnet, daß die Bleifreiklappe (5) und/oder die Axialdichtung (4) in bezug auf die Achse (11) kippbar abgestützt und hierdurch oberflächenbündig aneinander anlegbar sind.

2. Dichtungsanordnung nach Anspruch 1, dadurch gekennzeichnet, daß die Bleifreiklappe (5) und/oder die Axialdichtung (4) auf einer kalottenförmig gestalteten Stützfläche (7) abgestützt ist.

3. Dichtungsanordnung nach Anspruch 2, dadurch gekennzeichnet, daß zumindest eine Stützfläche (7) durch einen Bestandteil eines Kugelgelenkes (8) gebildet ist.

4. Dichtungsanordnung nach Anspruch 3, dadurch gekennzeichnet, daß das Kugelgelenk (8) selbsthemmend ausgebildet ist.

5. Dichtungsanordnung nach Anspruch 1 bis 4, dadurch gekennzeichnet, daß die Bleifreiklappe (5) durch eine Druckfeder um die Achse kippbar auf dem Schwenkarm abgestützt ist.

6. Dichtungsanordnung nach Anspruch 1 bis 4, dadurch gekennzeichnet, daß die Bleifreiklappe (5) und/oder die Axialdichtung (4) mit zumindest einer umlaufenden und senkrecht vorstehenden Dichtleiste (9) versehen ist, die mit der Axialdichtung (4) bzw. Bleifreiklappe (5) in Eingriff bringbar ist.

7. Dichtungsanordnung nach Anspruch 1 bis 6, dadurch gekennzeichnet, daß die Bleifreiklappe (5) und/oder die Axialdichtung (4) mit zumindest einer umlaufenden und senkrecht zurückspringenden Dichtnut (10) versehen ist, die mit der Axialdichtung (4) bzw. Bleifreiklappe (5) in Eingriff bringbar ist.

8. Dichtungsanordnung nach Anspruch 6 und 7, dadurch gekennzeichnet, daß die Bleifreiklappe (5) und/oder die Axialdichtung (4) mit mindestens einer umlaufenden und senkrecht vorstehenden Dichtleiste (9) versehen ist, die mit der Dichtnut (10) der Axialdichtung (4) bzw. Bleifreiklappe (5) in Eingriff bringbar ist.

9. Dichtungsanordnung nach Anspruch 8, dadurch gekennzeichnet, daß die Dichtleiste (9) und die Dichtnut (10) einander nach Form und Größe entsprechend ausgebildet sind.

## Claims

1. A sealing arrangement for use in the filler neck (1) of a fuel tank, comprising a radial seal (2) for sealing off a fuel nozzle (3), which can be introduced into the filler neck, and comprising an axial seal (4), which is independent of the radial seal, for sealing off an unleaded-fuel flap (5), said unleaded-fuel flap being attached to a spring-loaded swivel arm (6), being provided with a sealing face which concentrically surrounds its axis, and being able to be pressed against the axial seal by the swivel arm, characterized in that the unleaded-fuel flap (5) and/or the axial seal (4) is supported so as to be tiltable in relation to the axis (11) and can thus be placed against one another with flush surfaces.

2. A sealing arrangement according to claim 1, characterized in that the unleaded-fuel flap (5) and/or the axial seal (4) is supported on a support face (7) of spherically shaped design.

3. A sealing arrangement according to claim 2, characterized in that at least one support face (7) is formed by a constituent of a ball-and-socket joint (8).

4. A sealing arrangement according to claim 3, characterized in that the ball-and-socket joint (8) is constructed to be self-locking.

5. A sealing arrangement according to any of claims 1 to 4, characterized in that the unleaded-fuel flap (5) is supported on the swivel arm so as to be tiltable about the axis by means of a compression spring.

6. A sealing arrangement according to any of claims 1 to 4, characterized in that the unleaded-fuel flap (5) and/or the axial seal (4) is provided with at least one circumferential and vertically projecting sealing strip (9) which can be engaged with the axial seal (4) or unleaded-fuel flap (5).

7. A sealing arrangement according to any of claims 1 to 6, characterized in that the unleaded-fuel flap (5) and/or the axial seal (4) is provided with at least one circumferential and vertically set-back sealing groove (10) which can be engaged with the axial seal (4) or unleaded-fuel flap (5).

8. A sealing arrangement according to either of claims 6 and 7, characterized in that the unleaded-fuel flap (5) and/or the axial seal (4) is provided with at least one circumferential and vertically projecting sealing strip (9) which can be engaged with the sealing groove (10) of the axial seal (4) or unleaded-fuel flap (5).

9. A sealing arrangement according to claim 8, characterized in that the sealing strip (9) and the sealing groove (10) are constructed to correspond to one another in shape and size.

## Revendications

1. Dispositif d'étoupage à utiliser dans la tubulure de remplissage (1) d'un réservoir de carburant, comprenant un joint d'étanchéité radiale (2) pour assurer l'étanchéité d'un pistolet distributeur (3), pouvant être introduit dans la tubulure de remplissage, et un joint d'étanchéité axiale (4), indépendant de celui-ci, pour assurer l'étanchéité d'un clapet sans plomb (5), ce clapet sans plomb étant fixé sur un bras pivotant (6) sollicité par ressort, étant pourvu d'une surface d'étanchéité entourant concentriquement son axe, étant fixé sur un bras pivotant sollicité par ressort et pouvant être appliqué par ce bras pivotant contre le joint d'étanchéité axiale, caractérisé en ce que le clapet sans plomb (5) et/ou le joint d'étanchéité axiale (4) sont soutenus de façon à pouvoir basculer par rapport à l'axe (11) et peuvent ainsi s'appliquer l'un contre l'autre avec contact surfacique.

2. Dispositif d'étoupage selon la revendication 1, caractérisé en ce que le clapet sans plomb (5) et/ou le joint d'étanchéité axiale (4) sont appuyés sur une surface d'appui (7) réalisée en forme de calotte.

3. Dispositif d'étoupage selon la revendication 2, caractérisé en ce qu'au moins une surface d'appui (7) est formée par un composant d'une articulation à rotule (8).

4. Dispositif d'étoupage selon la revendication 3, caractérisé en ce que l'articulation à rotule (8) est agencée avec irréversibilité.

5. Dispositif d'étoupage selon une des revendications 1 à 4, caractérisé en ce que le clapet sans plomb (5) est appuyé par un ressort de pression contre le bras pivotant de façon à pouvoir basculer autour de l'axe.

6. Dispositif d'étoupage selon une des revendications 1 à 4, caractérisé en ce que le clapet sans plomb (5) et/ou le joint d'étanchéité axiale (4) est pourvu d'au moins une nervure périphérique d'étanchéité (9) faisant saillie perpendiculairement et pouvant être amenée en prise avec le joint d'étanchéité axiale (4) ou le clapet sans plomb (5).

7. Dispositif d'étoupage selon une des revendications 1 à 6, caractérisé en ce que le clapet sans plomb (5) et/ou le joint d'étanchéité axiale (4) est pourvu d'au moins une rainure périphérique d'étanchéité (10), formée perpendiculairement en creux et pouvant être amenée en prise avec le joint d'étanchéité axiale (4) ou le clapet sans plomb (5).

8. Dispositif d'étoupage selon une des revendications 6 et 7, caractérisé en ce que le clapet sans plomb (5) et/ou le joint d'étanchéité axiale (4) est pourvu d'au moins une nervure d'étanchéité (9) faisant saillie perpendiculairement et pouvant être amenée en prise avec la rainure d'étanchéité (10) du joint d'étanchéité axiale (4) ou du clapet sans plomb (5).

9. Dispositif d'étoupage selon la revendication 8, caractérisé en ce que la nervure d'étanchéité (9) et la rainure périphérique d'étanchéité (10) sont conçues de façon à se correspondre mutuellement en forme et en grandeur.
